# EUROPEAN PATENT SPECIFICATION

(11) **EP 4 042 893 B1**
(45) Date of publication and mention of the grant of the patent: **09.12.2026**
(21) Application number: 22154753.2
(22) Date of filing: 02.02.2022
(51) Int. Cl.: A41D 27/24, D02G 3/46, D05B 93/00, D04C 1/12, B29C 44/34

(54) **SURFACE SKIN, MOLDED PRODUCT, AND VEHICLE SEAT**
OBERFLÄCHENHAUT, FORMTEIL UND FAHRZEUGSITZ
REVÊTEMENT DE SURFACE, PRODUIT MOULÉ ET SIÈGE DE VÉHICULE

(30) Priority: 08.02.2021 JP 2021017975
(43) Date of publication of application: 17.08.2022
(73) Proprietor: Tachi-S Co., Ltd., Akishima-shi, Tokyo 196-8611 (JP); Azuma Co., Ltd., Tokyo 111-0056 (JP)
(72) Inventor: SASAKI, Seiichi, Tokyo, 196-8611 (JP); TAKEDA, Toshiyuki, Tokyo, 111-0056 (JP)
(74) Representative: MERH-IP Matias Erny Reichl Hoffmann Patentanwälte PartG mbB

(56) References cited:
- WO-A1-2006/001067
- JP-A- 2020 065 841

## Description

### Background

The disclosure of the present invention relates to a surface skin. For example, the present invention is applicable to a vehicle seat including a skin integrated foam-molded product.

There are known some head rests, arm rests and the like integrated with the vehicle seat (skin integrated foam-molded products) which are produced by the steps of: cutting a plurality of surface skin members into predetermined shapes; sewing the cut surface skin members into a bag shape by means of a sewing machine; and injecting a foaming liquid as a pad molding raw material into the skin bag for integrally foam molding the pad with the surface skin (Japanese Unexamined Patent Application Publication No. 2020-65841). WO 2006/ 001 067 A1 relates to an upholstery stitched by means of a sewing thread to thereby obtain an upholstery member of bag form. Foam raw material is injected in the interior of the upholstery member, and foamed into a headrest. As the sewing thread, use is made of a hot melt fiber composed of a low-melting-point hot melt fiber and a high-melting-point hot melt fiber. The low-melting-point hot melt fiber of the sewing thread is melted by heat at headrest molding, especially heat at foaming of the foam raw material, so that the thread insertion through holes of stitch shall be sealed.

### Summary

The skin integrated foam molding technique may sometimes encounter the following problem. Some of the foaming liquid injected inside the skin bag may leak through a gap between a needle hole made by a needle sewing the surface skin members together and a thread and become hardened on the outside of the surface skin.

An object of the disclosure of the present invention is to provide a technique for preventing the leakage of the foaming liquid through the needle holes.
In particular, it is provided a surface skin having the features defined in claim 1. Moreover, it is provided a molded product having the features defined in claim 6. Moreover, it is provided a vehicle seat having the features defined in claim 7. Further preferred embodiments are defined in the dependent claims.

According to the present invention, the leakage of the foaming liquid through the needle holes can be prevented.

### Brief Description of the Drawings

Fig. 1 is an outline view showing a seat for vehicle according to an embodiment hereof;
Fig. 2 is a sectional view of a head rest of Fig. 1 taken on the line A-A in Fig. 1;
Fig. 3 is a sectional view of a surface skin of Fig. 2 taken on the line B-B in Fig. 2;
Fig. 4 is a schematic diagram showing a second thread according to a first embodiment hereof; and
Fig. 5 is a schematic diagram showing a second thread according to a second embodiment hereof.

### Description of the Preferred Embodiments

The embodiments of the present invention will hereinbelow be described with reference to the accompanying drawings. In the following description, however, the same or similar reference numerals are used to refer to the same or similar components which are explained only once in some cases to avoid repetitions. For greater clarity, there are cases where the drawings provide more schematic illustrations of some parts than those in practical modes in terms of width, thickness, shape and the like thereof. It is noted that the disclosure is meant only for an example. The drawings are not meant to limit the interpretation of the present invention.

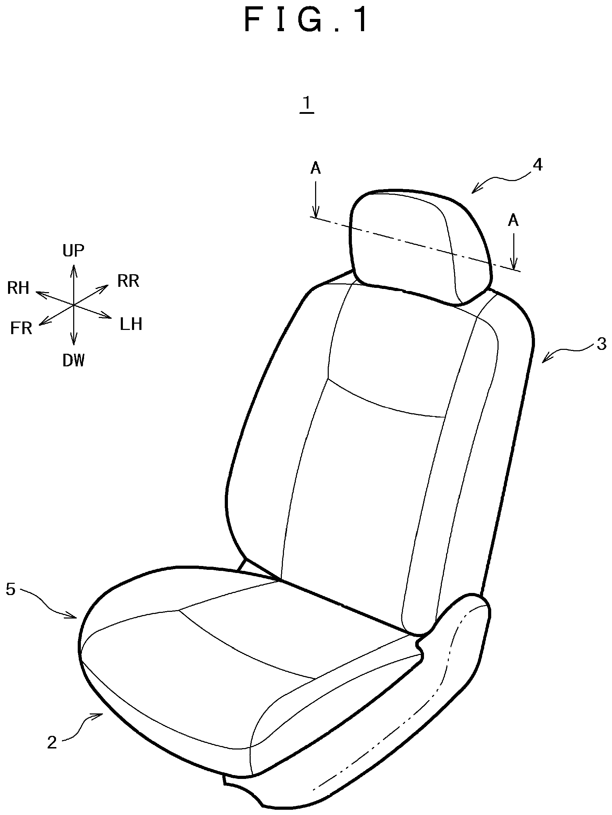

A vehicle seat according to an embodiment of the present invention is described with reference to Fig. 1. Fig. 1 is an outline view showing a vehicle seat according to the embodiment.

In the following description, a vertical direction is defined as upward/downward directions (UP, DW) on the assumption that a vehicle equipped with the vehicle seat is placed on a horizontal plane. Further, forward/backward directions (FR, RR) are so defined as to coincide with the longitudinal direction of the vehicle while right/left directions are so defined as to coincide with a width direction of the vehicle. "FR" means a forward direction of the vehicle while "RR" means a backward direction of the vehicle. In the description of a vehicle seat 1, a righthand side (RH) and a left-hand side (LH) are defined to mean the right side and the left side of the vehicle as seen from the rear side thereof.

The vehicle seat 1 includes a seat cushion 2, a seat back 3, a head rest 4, and side supports 5.

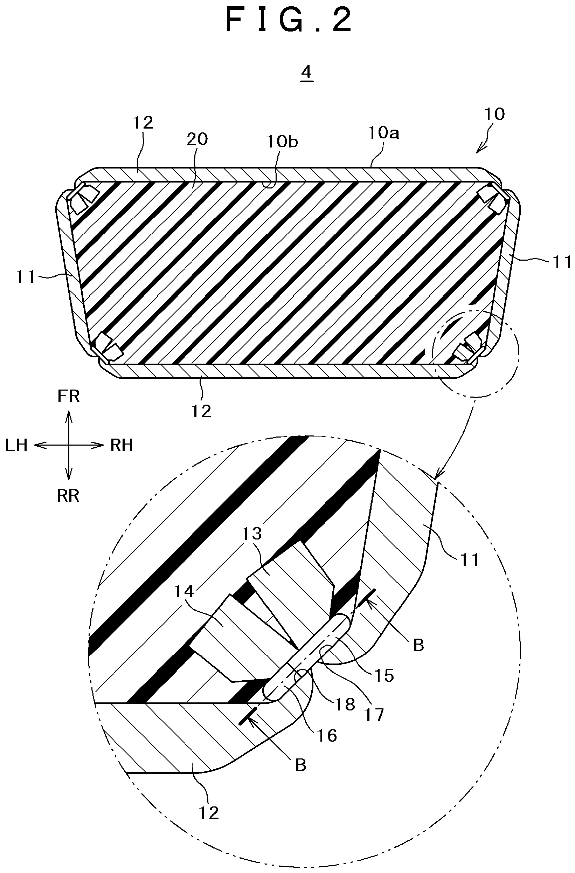

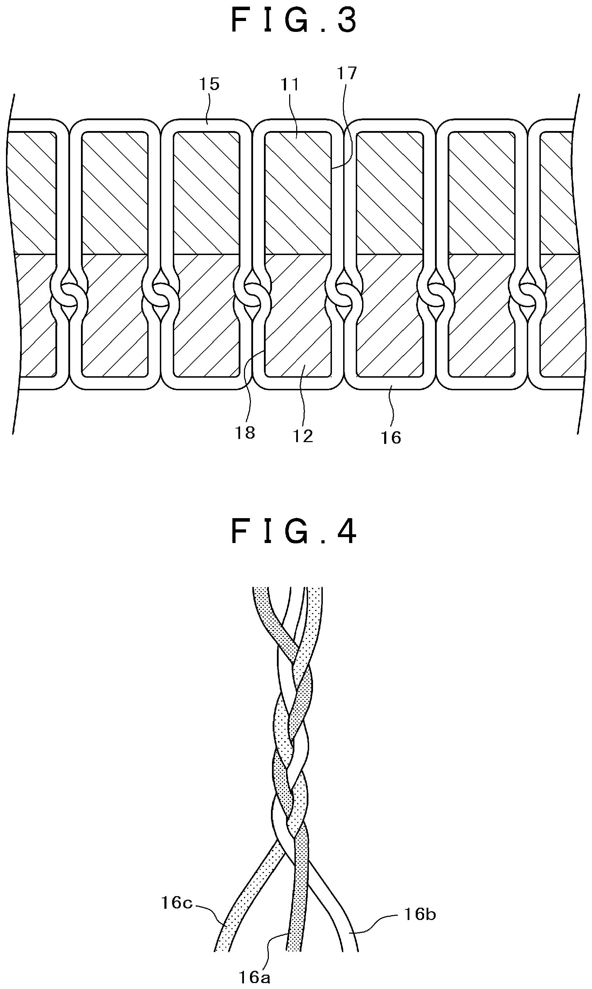

The description is made on the head rest 4 with reference to Fig. 2 and Fig. 3. Fig. 2 is a sectional view of the head rest of Fig. 1 taken on the line A-A in Fig. 1. Fig. 3 is a sectional view of a surface skin of Fig. 2 taken on the line B-B in Fig. 2

As shown in Fig. 2, the head rest 4 includes a foamed body 20 formed of a foamed synthetic resin such as soft polyurethane foam, and a surface skin 10 covering the foamed body 20. The head rest 4 is a skin integrated foam-molded product where the foamed body 20 made by foaming and hardening a foaming liquid is integrated with the surface skin 10. The foamed body is integrated with the surface skin 10 by integrally foaming the foaming liquid by injecting the foaming liquid under a back side 10b (inner side) of the surface skin 10 set in a cavity of a foaming mold (not shown).

As shown in Fig. 2 and Fig. 3, the surface skin 10 is a member for covering the foamed body 20. A surface 10a of the surface skin 10 defines an exterior surface of the head rest 4. The surface skin 10 includes a plurality of surface skin members 11, 12, and a first thread 15 and a second thread 16 for sewing together hem parts 13, 14 of the surface skin members 11, 12. While the surface skin 10 of this embodiment is substantially formed in a bag shape and covers the whole body of the foamed body 20, the surface skin 10 may also be formed in any other shape that covers a part of the foamed body 20.

From the viewpoint of comfortable seating, good tactile effect, stretchability, and the like, the surface skin members 11, 12 are constituted of two or more layers where a fabric-like foamed synthetic resin is integrally molded to a back side of fabric, synthetic leather, leather, or the like. However, it is also possible to omit the fabric-like foamed synthetic resin. In order to prevent the foaming liquid from immersing into the fabric or the fabric-like foamed synthetic resin, the surface skin members 11, 12 may also be arranged to attach a film to an inner side of the fabric or a fabric-like foamed synthetic resin, or to form a coating by thermally melting the inner side of the fabric-like foamed synthetic resin.

The surface skin 10 is formed by laying the hem parts 13, 14 of the two surface skin members 11, 12 on top of each other to bring the surfaces 10a thereof into contact, followed by sewing together the hem parts 13, 14 by means of a sewing machine stitching the whole length of the hem parts. Therefore, the first thread 15 and the second thread 16 are threaded through needle holes 17, 18 formed through the surface skin members 11, 12 by the sewing needle during the sewing operation, and lace each other to sew up the two surface skin members 11, 12. It is noted here that the first thread 15 is a needle thread threaded through an eye formed in a sewing needle not shown. The second thread 16 is a bobbin thread set in a bobbin. The term "interlace" means that one thread intersects with a loop of the other thread or passes through a loop of the other thread.

According to the embodiment, a thread lacing portion between the first thread 15 and the second thread 16 is located at place shifted into the surface skin member 12 (at a lower part of the drawing surface of Fig. 3) from a boundary between the two surface skin members 11, 12. Therefore, the first thread 15 is partially passed into the needle hole 18 in the surface skin member 12 (lower part of the drawing surface of Fig. 3) while passed through the needle hole 17 in the surface skin member 11. On the other hand, the second thread 16 is partially passed into the needle hole 18 in the surface skin member 12 but is not passed into the needle hole 17 in the surface skin member 11.

The first thread 15 is a normal machine-sewing thread made of a strong synthetic resin such as polyester spun yarn, nylon filament, polyester filament, or bond processed yarn. It is noted here that the polyester spun yarn is a synthetic fiber to which a texture of a natural material such as cotton is attached. The nylon filament and the polyester filament are synthetic fibers to which a texture of a natural material such as silk is attached. The bond processed fiber means a thread made by coating a nylon filament or polyester filament with a bond resin. The first thread 15, for example, is a count 8 thread. The sewing needle, for example, is a DP×17LE needle count 18 SPD.

The second thread 16 has a braided or warp knitted structure and is composed of a polyester bulky yarn or nylon bulky yarn having stretchability. The second thread 16 has sufficient stretchability for filling in a hole made by the needle during the sewing operation and is formed by warp knitting or braiding (tightly braided or loosely braided). A piece of second thread 16 has a finely braided structure and hence, is physically flexible. This ensures that even if the foaming liquid should fail to uniformly permeate the thread, the thread still has flexibility by virtue of the weaved texture. Accordingly, the bulky fibers can fit in the needle hole, thus physically preventing the liquid leakage. That is, the thread can obviate the liquid leakage.

In a case where the second thread 16 is composed of a bulky spun yarn or textured yarn alone, as set forth in Japanese Unexamined Patent Application Publication No. 2020-65841, the expansion of the thread with the foaming liquid is increased by loosely twisting the yarns or not twisting the yarns. Loosely twisted, however, the thread lacks in flexibility so that the liquid leakage results if the foaming liquid fails to permeate the thread uniformly.

According to the embodiment, the thread having stretchability is used for filling in the hole made by the needle so as to prevent the liquid leakage. According to Japanese Unexamined Patent Application Publication No. 2020-65841, the untwisted thread per se is expanded with the liquid. On the other hand, the embodiment is adapted to make the thick thread by braiding fibers. The second thread 16 is made of one type of material and has an advantage of a piece of thread having a fine structure.

According to the embodiment, the second thread 16 is thinned under tension just before subjected to sewing but becomes as thick as after the thread is sewn. That is, the second thread 16 has the same thickness as a normal count 8 spun yarn at the sewing moment. After sewn on the surface skin members, however, the thread recovers its original thickness and fills in the needle hole, so as to prevent the liquid leakage during the foaming process.

The second thread 16 as the bobbin thread is a stretchable thread. It is also considered all right to use the stretchable thread as the first thread 15 which is the needle thread. However, the second thread 16 is too thick to be threaded through the eye of the sewing needle. Therefore, the embodiment applies the stretchable thread only to the bobbin thread. In a case where the stretchable thread is used as the first thread 15, the thread is thinned to 100d (111.1 dtex) or less and braided up. According to the embodiment, the description is made on a case where the stretchable thread is applied only to the bobbin thread.

When the surface skin members 11, 12 are sewn together with the first thread 15 and the second thread 16, a sealing material such as a woolly spin tape is overlapped on the surface skin members 11, 12 and sewn together. By doing so, the foaming liquid is more positively prevented from leaking through the needle holes 17, 18 during the foam molding of the foamed body 20. According to the embodiment, however, the sealing member is not sewn together with the surface skin members. Therefore, a step of sewing the sealing member to a correct position can be dispensed with, resulting in an enhanced sewing operation efficiency.

### First Embodiment

How to braid fibers of the second thread 16 according to a first embodiment hereof is described with reference to Fig. 4. Fig. 4 is a schematic diagram showing the second thread according to the first embodiment.

First, a thread having a thickness of 200d (222.2 dtex) is formed by twisting two pieces of fiber each having a fineness of 100d (111.1 dtex). Subsequently, two pieces of the thread each having the fineness of 200d are twisted to form a thread having a thickness of 400d (444.4 dtex). Thus, pieces of thread 16a, 16b, 16c are formed as shown in Fig. 4. That is, the pieces of thread 16a, 16b, 16c each have a fineness of 400d as formed of four pieces of fiber each having a fineness of 100d (100d×2×2= 400d (4 pieces)). It is noted here that "denier" [d] which is a unit of fineness indicating the thickness of thread represents a mass of 9,000 meter of thread in grams.

The three pieces of thread 16a, 16b, 16c each having a fineness of 400d are braided together, as shown in Fig. 4. Thus, a single thread having a fineness of 1200d (1333.3 dtex) (3×400d (4 pieces)= 1200d (12 pieces)) is formed of three pieces of thread, each having the fineness of 400d. This constitutes the second thread 16. The second thread 16 is not made by twisting three pieces of thread but by braiding three pieces of thread. Therefore, the three pieces of thread do not untwine spontaneously.

As for a braiding method, a 0,0254m-long thread (1-inch-long thread) can be made by braiding fiber pieces 10 times (gear 26 tight braiding type) or a 0,0254m-long thread (1-inch-long thread) can be made by braiding fiber pieces 7 times (gear 36 loose braiding type). The tight braiding type is not limited to repeating 10 braiding steps to make the 0,0254m-long thread (1-inch-long thread) but the braiding step can be repeated 9 times or repeated 11 times to make the 0,0254m-long thread (1-inch-long thread). Further, the loose braiding type is not limited to repeating 7 braiding steps to make the 0,0254m-long thread (1-inch-long thread) but the braiding step can be repeated 8 times to make the 0,0254m-long thread (1-inch-long thread) or repeated 6 times to make the 0,0254m-long thread (1-inch-long thread).

### Second Embodiment

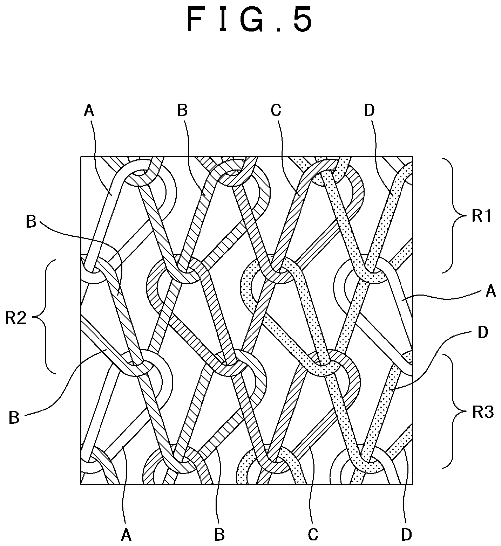

The description is made on a method of braiding the second thread 16 according to a second embodiment hereof. Fig. 5 is a schematic diagram of the second thread according to the second embodiment.

Knitting is classified into weft knitting and warp knitting. According to the second embodiment, the second thread 16 is formed by warp knitting First, two pieces of fiber each having a fineness of 100d (111.1 dtex) are twisted to form a thread having a thickness of 200d (222.2 dtex). Thus, pieces of thread A, B, C, D shown in Fig. 5 are obtained. Namely, the pieces of thread A, B, C, D each have a fineness of 200d and is formed of two pieces of fiber each having a fineness of 100d (100d×2= 200d (2 pieces)). As shown in Fig. 5, the second thread 16 is a four-thread warp knitted cord formed of four pieces of thread A, B, C, D which are complicatedly knitted and vertically extended while individually forming loops. In a row R1, for example, the thread A, the thread B, the thread C, and the thread D form respective loops in the order named from the left side of the drawing. In a row R2, the thread B, the thread C, the thread D, and the thread A form respective loops in the order named from the left side of the drawing. In a row R3, the thread A, the thread B, the thread C, and the thread D form respective loops in the order named from the left side of the drawing. The second thread 16 has a fineness of 800d (888.9 dtex) (100d×2×4).

While the disclosure of the present invention made by the present inventors has been specifically described with reference to the embodiments and examples thereof, it goes without saying that the present invention is not limited to the foregoing embodiments and examples, and a variety of changes and modifications can be made thereto.

While the embodiments have been described by way of example of the head rest for vehicle seat, the embodiments are also applicable to other skin integrated foam-molded products such as arm rest, and console box.

## Claims

1. A surface skin (10) suitable for a foamed body (20) tc be integrally foam-molded with it and further suitable to cover the foamed body (20), comprising:
a first surface skin member (11);
a second surface skin member (12) in contact with the first surface skin member (11), wherein the contact between the first surface skin member (11) and the second surface skin member (12) is made by laying hem parts (13, 14) of the two surface skin members (11, 12) on top of each other;
a first thread (15) located in a hole (17, 18) extended through the first surface skin member (11) and the second surface skin member (12); and
a second thread (16) located in the hole (18);
wherein each of the first thread (15) and the second thread (16) has a loop that interlaces with the other in the hole; and
the first thread (15) is a sewing thread to be passed through an eye of a needle;
**characterized in that**,
the second thread (16) is a thread having a braided or warp knitted structure formed of threads having a twisted structure, and is a thread that is thinned under tension and recovers its original thickness after the thread is sewn,
wherein the threads having the twisted structure are made of stretchable polyester or stretchable nylon fibers.

2. The surface skin according to Claim 1, wherein the second thread (16) is a thread which is formed by twisting two pieces of fiber to form a twofold thicker thread, followed by twisting two pieces of the twofold thicker thread to form a four-fold thicker thread, followed by braiding three pieces of the four-fold thicker thread (16a, 16b, 16c) to form a twelve-fold thicker thread.

3. The surface skin according to Claim 2, wherein the second thread (16) is made by braiding fiber pieces 9 to 11 times per 0,0254m (per inch).

4. The surface skin according to Claim 2, wherein the second thread (16) is made by braiding fiber pieces 8 to 6 times per 0,0254m (per inch).

5. The surface skin according to Claim 1, wherein the second thread (16) is a thread which is formed by twisting two pieces of fiber to form a twofold thicker thread, followed by warp knitting four pieces of the twofold thicker thread.

6. A molded product comprising:
the surface skin (10) according to any one of Claims 1 to 5; and
a foamed body (20) integrally foam-molded with the surface skin (10) and covered by the surface skin (10).

7. A vehicle seat comprising:
the molded product according to Claim 6;
a seat cushion (2); and
a seat back (3),
wherein the molded product is a head rest (4).

## Patentansprüche

1. Oberflächenhaut (10), die dafür geeignet ist, dass ein Schaumkörper (20) damit einteilig formgeschäumt wird, und die ferner dafür geeignet ist, den Schaumkörper (20) zu bedecken, die Folgendes umfasst:
ein erstes Oberflächenhautelement (11);
ein zweites Oberflächenhautelement (12), das sich mit dem ersten Oberflächenhautelement (11) in Kontakt befindet, wobei der Kontakt zwischen dem ersten Oberflächenhautelement (11) und dem zweiten Oberflächenhautelement (12) durch Aufeinanderlegen von Saumkomponenten (13, 14) der zwei Oberflächenhautelemente (11, 12) hergestellt wird;
einen erste Faden (15), der in einem Loch (17, 18) angeordnet ist, das sich durch das erste Oberflächenhautelement (11) und das zweite Oberflächenhautelement (12) erstreckt; und
einen zweiten Faden (16), der in dem Loch (18) angeordnet ist;
wobei der erste Faden (15) und der zweite Faden (16) jeweils eine Schleife aufweisen, die mit der anderen im Loch verschlungen ist; und
der erste Faden (15) ein Nähgarn ist, das durch ein Auge einer Nadel geführt werden soll;
**dadurch gekennzeichnet, dass**
der zweite Faden (16) ein Faden ist, der eine geflochtene oder kettengewirkte Struktur aufweist, die aus Fäden mit einer verdrillten Struktur gebildet ist, und ein Faden ist, der unter Spannung gedünnt wird und seine ursprüngliche Dicke zurückgewinnt, nachdem der Faden vernäht worden ist,
wobei die Fäden mit der verdrillten Struktur aus dehnbarem Polyester oder dehnbaren Nylonfasern hergestellt sind.

2. Oberflächenhaut nach Anspruch 1, wobei der zweite Faden (16) ein Faden ist, der durch Verdrillen von zwei Faserstücken, um einen zweimal dickeren Faden zu bilden, gefolgt vom Verdrillen von zwei Stücken des zweimal dickeren Fadens, um einen vielmal dickeren Faden zu bilden, gefolgt vom Flechten von drei Stücken des viermal dickeren Fadens (16a, 16b, 16c), um einen zwölfmal dickeren Faden zu bilden, gebildet wird.

3. Oberflächenhaut nach Anspruch 2, wobei der zweite Faden (16) durch Flechten von Faserstücken 9 bis 11-mal pro 0,0254 m (pro Zoll) hergestellt wird.

4. Oberflächenhaut nach Anspruch 2, wobei der zweite Faden (16) durch Flechten von Faserstücken 8 bis 6-mal pro 0,0254 m (pro Zoll) hergestellt wird.

5. Oberflächenhaut nach Anspruch 1, wobei der zweite Faden (16) ein Faden ist, der durch Verdrillen von zwei Faserstücken, um einen zweimal dickeren Faden zu bilden, gefolgt vom Kettenwirken von vier Stücken des zweimal dickeren Fadens gebildet wird.

6. Formerzeugnis, das Folgendes umfasst:
die Oberflächenhaut (10) nach einem der Ansprüche 1 bis 5; und
einen Schaumkörper (20), der mit der Oberflächenhaut (10) einteilig formgeschäumt ist und durch die Oberflächenhaut (10) bedeckt ist.

7. Fahrzeugsitz, der Folgendes umfasst:
das Formerzeugnis nach Anspruch 6;
ein Sitzpolster (2); und
eine Rückenlehne (3),
wobei das Formerzeugnis eine Kopfstütze (4) ist.

## Revendications

1. Peau de surface (10) adaptée pour être intégralement moulée par moussage avec un corps en mousse (20) et adaptée en outre pour recouvrir le corps mousse (20), comprenant :
un premier élément de peau de surface (11) ;
un deuxième élément de peau de surface (12) en contact avec le premier élément de peau de surface (11), le contact entre le premier élément de peau de surface (11) et le deuxième élément de peau de surface (12) étant réalisé en en déposant en couches les parties ourlées (13, 14) des deux éléments de peau de surface (11, 12) l'une sur l'autre ;
un premier fil (15) situé dans un trou (17, 18) étendu à travers le premier élément de peau de surface (11) et le deuxième élément de peau de surface (12) ; et
un deuxième fil (16) situé dans le trou (18) ;
chacun du premier fil (15) et du deuxième fil (16) ayant une boucle qui s'entrelace avec l'autre dans le trou ; et
le premier fil (15) étant un fil à coudre devant être passé à travers le chas d'une aiguille ;
**caractérisée en ce que**
le deuxième fil (16) est un fil ayant une structure tressée ou en tricot chaîne formée de fils ayant une structure torsadée, et est un fil qui est aminci sous tension et retrouve son épaisseur d'origine une fois le fil cousu,
les fils ayant la structure torsadée étant réalisés en fibres de polyester étirable ou de nylon étirable.

2. Peau de surface selon la revendication 1, dans laquelle le deuxième fil (16) est un fil qui est formé en torsadant deux portions de fibres pour former un fil deux fois plus épais, puis en torsadant deux portions du fil deux fois plus épais pour former un fil quatre fois plus épais, puis en tressant trois des fils quatre fois plus épais (16a, 16b, 16c) pour former un fil douze fois plus épais.

3. Peau de surface selon la revendication 2, dans laquelle le deuxième fil (16) est réalisé en tressant des portions de fibres 9 à 11 fois par 0,0254 m (par pouce).

4. Peau de surface selon la revendication 2, dans laquelle le deuxième fil (16) est réalisé en tressant des portions de fibres 8 à 6 fois par 0,0254 m (par pouce).

5. Peau de surface selon la revendication 1, dans laquelle le deuxième fil (16) est un fil qui est formé en torsadant deux portions de fibres pour former un fil deux fois plus épais, puis par tricotage chaîne de quatre portions du fil deux fois plus épais.

6. Produit moulé comprenant :
une peau de surface (10) selon l'une quelconque des revendications 1 à 5 ; et
un corps en mousse (20) intégralement moulé par moussage avec la peau de surface (10) et couvert par la peau de surface (10).

7. Siège de véhicule comprenant :
le produit moulé selon la revendication 6 ;
un coussin de siège (2) ; et
un dossier de siège (3),
dans lequel le produit moulé est un appui-tête (4).
